Europäisches Patentamt

(19) European Patent Office

Office européen des brevets

(11) Numéro de publication: **0 070 773**
**B2**

(12) **NOUVEAU FASCICULE DE BREVET EUROPEEN**

(45) Date de publication du nouveau fascicule du brevet: **02.05.90**

(51) Int. Cl.⁵: **B 23 K 35/30,** C 22 C 38/24, C 22 C 38/34

(21) Numéro de dépôt: **82401329.6**

(22) Date de dépôt: **16.07.82**

(54) **Procédé de fabrication d'une pièce métallique composite et produits obtenus.**

(30) Priorité: **17.07.81 FR 8113939**

(43) Date de publication de la demande:
**26.01.83 Bulletin 83/04**

(45) Mention de la délivrance du brevet:
**08.05.85 Bulletin 85/19**

(45) Mention de la decision concernant l'opposition:
**02.05.90 Bulletin 90/18**

(84) Etats contractants désignés:
**AT BE CH DE FR GB IT LI LU NL SE**

(56) Documents cités:
**DD-A- 135 364**
**DD-A- 139 696**
**DE-A-1 814 112**
**DE-A-2 754 437**
**DE-B-1 209 756**
**US-A-2 081 394**
**US-A-3 719 790**
**US-A-3 855 015**

**Industrie-Anzeiger no. 6, pp. 96-98**
**Schweissen und Schneiden, Jg. 17, Heft 11, pp. 605-608**

**Sonderdruck aus Maschinenmarkt, Jg. 68, no. 94**
**Prospekt "Pulvimphy" von Creusot-Loire**

(73) Titulaire: **CREUSOT-LOIRE**
**42 rue d'Anjou**
**F-75008 Paris (FR)**

(72) Inventeur: **Boucher, André**
**Chateau Dorian**
**F-42490 Fraisses (FR)**
Inventeur: **Marand, Bernard**
**5 Place Maréchal Foch**
**F-42000 Saint-Etienne (FR)**

(74) Mandataire: **Bressand, Georges et al**
**c/o CABINET LAVOIX 2 Place d'Estienne d'Orves**
**F-75441 Paris Cédex 09 (FR)**

EP 0070773 B2

Courier Press, Leamington Spa, England.

# EP 0 070 773 B2

**Description**

La présente invention concerne la fabrication de pièces métalliques dont le coeur et la surface doivent présenter des caractéristiques différentes, et souvent même contradictoires, parce qu'elles sont soumises à des sollicitations qui ne sont pas du tout les mêmes à coeur et en surface.

C'est le cas par exemple des cylindres de laminoirs à froid, ou pour certains galets de laminage ou de formage, ou encore pour des lames de cisailles, ou pour des plaques d'usure ou des plaques de blindage.

Pour toutes ces pièces, le coeur doit être peu fragile, et la surface doit posséder au contraire une résistance élevée à la traction, à la fatigue, à l'abrasion, et une dureté élevée.

Traditionnellement, ces pièces sont réalisées à partir d'un matériau homogène, la surface subissant un traitement thermique spécial.

Plus récemment, on a parfois fait appel à des pièces métalliques composites.

Dans tous les cas, la fabrication de ces pièces métalliques solicitées différemment à coeur et en surface soulève de difficiles problèmes.

Voici par exemple comment se présentent les difficultés dans la fabrication des cylindres de laminoirs à froid.

Le laminage est une opération métallurgique qui consiste à réduire la section d'un produit solide, chaud ou froid, en le faisant passer entre deux pièces de révolution dites cylindres de laminoir. La rotation entraine le produit entre les deux cylindres et l'épaisseur du produit se trouve réduite à l'écartement des deux génératrices des cylindres.

On lamine les produits soit à chaud (jusqu'à 1200°C), soit à froid. Dans le premier cas, les sollicitations sont surtout d'origine thermique, tandis qu'elles sont essentiellement d'origine mécanique dans le second cas.

Les cylindres de laminoirs à froid doivent résister à trois types de sollicitations mécaniques:

1) *Les déformations* cycliques imposées à l'ensemble des cylindres d'abord par les efforts de flexion, résultant d'une part des pressions appliquées sur les tourillons et d'autre part de la réaction du produit laminé, puis par les efforts de torsion résultant du couple d'entrainement;

2) *Les contraintes de laminage*, cycliques, qui se déduisent des théories du contact de Hertz. Les contraintes de compression atteignent des valeurs très élevées en surface, tandis qu'en sous-couche, la tension de cisaillement principale, agissant dans un plan orienté à 45° par rapport à la direction d'application de la charge, présente un maximum en un point appelé "Point de Hertz". Comparé au laminage à chaud, ces contraintes de Hertz sont considérables dans les cylindres de laminoirs à froid, car les contraintes d'écoulement du métal froid sont très élevées, plus spécialement lorsqu'il s'agit de métal dur et écroui.

a titre indicatif, l'évaluation des contraintes dans un cylindre de diamètre égal à 600 mm conduit à des contraintes maximales de compression de l'ordre de 1000 à 1500 N/mm², et la tension de cisaillement maximale située entre 3 et 5 mm sous la peau est de l'ordre de 300 à 600 N/mm².

Lors de la rotation d'un cylindre, chaque fibre de ce cylindre est sollicitée cycliquement.

3) *L'usure* provoquée par le glissement du produit laminé dans l'emprise des cylindres. Cette usure se traduit par une dégradation de la surface des cylindres, dégradation qui elle-même détériore l'aspect de surface du produit laminé. Le cylindre usé doit être remis en état par enlèvement de matière.

Ces trois catégories de sollicitations imposent au cylindre des propriétés contradictoires:

La coeur doit présenter une résistance à la traction modérée, de l'ordre de 1000 MPa, assortie d'une bonne résilience;

La couche de travail doit posséder une grande résistance à la fissuration par fatigue, une dureté élevée de 85 à 100 Shore (60 à 66 HRC*), un faible coefficient de frottement et une résistance élevée à l'abrasion.

Traditionnellement, les cylindres de laminoirs à froid sont réalisés dans un matériau homogène. Ce matériau ne peut que demeurer un compromis qui doit assurer à la fois la ténacité à coeur et la résistance de la couche de travail: l'ensemble du cylindre est traité pour le niveau de résistance souhaité à coeur, tandis que les propriétés de résistance à l'usure et à la fatigue sont conférés à la couche de travail par un traitement de trempe.

Dans leur grande majorité, les cylindres de laminoirs à froid sont ainsi réalisés dans des nuances d'aciers dérivés du 100 C 6, acier à 1% C et 1,5% Cr, ou 85 CDV 7, acier à 0,85% C, 1,75% Cr, avec un peut de molybdène et un peu de vanadium, bien que ces aciers ne représentent pas l'optimum pour la couche de travail.

Pour les cylindres de petits diamètres, et plus spécialement pour ceux destinés aux cages à multi-cylindres, on peut utiliser également des nuances d'acier plus carburées et plus alliées, dont le comportement à l'usure est meilleur que celui des aciers dérivés du 100 C6. Ce sont des aciers au chrome du type Z 150CDV 12, acier à 1,5% C, 12% Cr, avec un peu de molybdène et un peut de vanadium, ou dérivés.

Pour ces derniers cylindres, destinés aux cages à multi-cylindres, des progrès importants ont été réalisés par l'utilisation d'aciers rapides au vanadium. Leur fote teneur en carbures de vanadium $V_4C_3$ augmente très sensiblement la résistance à l'usure, le rendement et la durée de vie des cylindres. On peut

(*) HRC = Dureté Rockwell C suivant la norme AFNOR n° NF A 03153.

2

cependant difficilement envisager la fabrication de gros cylindres avec ces types d'acier rapide, à cause des difficultés technologiques et du coût qui serait prohibitif.

Il est toutefois possible d'étendre aux cylindres de tous diamètres, l'avantage de l'utilisation d'aciers rapides, si l'on réalise des cylindres bi-métalliques, dont seule la couche de travail est constituée en acier rapide.

Le principe d'une construction composite est déjà employé pour la réparation ou la fabrication de certains cylindres de laminage à chaud. La couche de travail est remise à la cote, ou créée par dépôt sur l'âme du cylindre, d'un matériau approprié, devant résister au contact du métal à haute température. L'acier constituant cette couche de travail doit avoir des propriétés de résistance à l'oxydation, résistance au fluage, résistance à la fatigue d'origine thermique. Il est pour cela choisi dans la famille des aciers dits martensitiques à haut chrome, contenant de 0,2 à 0,8% de carbone et de 4 à 20% de chrome (entre 6 et 17% de chrome suivant les alliages), ces aciers étant particulièrement bien adaptés à cet usage. Le rechargement est opéré au moyen d'un procédé de soudure usuel, le plus répandu étant le procédé à l'arc sous flux, ou arc submergé, utilisant le métal d'apport sous forme de fil ou sous forme de feuillard. Les brevets USA 3.855.015 et DE-A—1.814.112 décrivent de tels procédés et l'utilisation d'acier martensitique à haut chrome, éventuellement additionné de titane et d'aluminium. Ces procédés et alliages de rechargement conviennent aux cylindres de laminoirs à chaud qui sont surtout soumis à des effets thermiques, tandis que les pressions de laminage n'entrainent que des contraintes mécaniques modérées.

Par comparaison, la couche de travail des cylindres de laminage à froid est soumise à des contraintes mécaniques cycliques considérables. Cela exige pour cette couche des matériaux très résistants, différents de ceux qui sont choisis pour le laminage à chaud, et une qualité métallurgique très grande: ainsi, dans la couche de travail des cylindres à froid, les inclusions ou défauts, au-delà d'une taille critique, peuvent devenir des sites d'amorçage de fissuration par fatigue. Cette qualité métallurgique, avec absence de défauts de taille critique et finesse de structure, ne peut dans l'état actuel, être garantie par les procédés habituels de soudage par fil ou feuillard sous flux surtout en utilisant des alliages de rechargement préconisés par l'invention.

L'invention fait donc appel à des procédés plus performants qui, tous trois, utilisent le métal d'apport sous forme de poudre et ont pour source thermique, à volonté:

une torche plasma d'arc transféré,

ou une torche plasma d'arc semi-transféré,

ou une torche à énergie laser.

Voici un rappel du principe des deux premiers procédés:

### Plasma d'Arc Transféré

Un gaz plasmagène est confiné par une tuyère-anode à la pointe d'une électrode en tungstène. La torche est placée près de la pièce à recharger et l'arc maintenu entre cathode et pièce. Le gaz, ionisé par l'arc, crée le jet de plasma qui est "transféré" à la pièce. Cette source thermique fond la surface de la pièce. La torche présente des injecteurs de poudre qui dirigent le matériau d'apport au voisinage de l'impact de celui-ci avec la pièce. L'arc plasma fond simultanément le produit d'apport et la surface de la pièce. Il se forme un bain métallique et le rechargement est lié à la pièce par une véritable opération métallurgique du type soudage.

### Plasma d'Arc Semi-Transféré

Comme dans le procédé plasma transféré, le gaz plasmagène est confiné par une tuyère anode, mais deux arc sont simultanément utilisés. Un premier arc jaillit entre cathode axiale et anode. Le gaz ionisé par l'arc est expulsé, créant une colonne plasma "soufflé". La fonction de cet arc est essentiellement de créer une colonne de gaz conducteur, dans laquelle va circuler l'arc principal, de soudage, arc transféré de la cathode à la pièce à recharger. La présence de l'arc "soufflé" stabilise l'arc plasma transféré et la conduite indépendante des deux arcs permet de mieux contrôler le bilan thermique de l'opération et par là de maîtriser la structure du dépôt.

Ces deux procédés ont en commun l'absence de l'utilisation d'un laitier. La protection du bain est assurée par un gaz neutre ou réducteur. Ceci est un facteur de qualité (absence d'inclusions de laitier).

*Remarque*: Les procédés "plasma d'arc transféré" et "plasma d'arc semi-transféré" ne doivent pas être confondus avec le procédé "projection par plasma soufflé". Ce dernier procédé utilise un "jet plasma" pour *projeter* des poudres qui s'accrochent mécaniquement sur le substrat. Il n'y a aucun effet de soudure. Les revêtements sont poreux, oxydés, peut adhérents et ne sauraient résister sur un cylindre de laminoir à froid.

Des outils tels que cylindres (ou galets) de travail pour laminage à froid, outils tranchants, lames circulaires ou droites, plaques d'usure ou de blindage, nécessitent, pour leur couche de travail, des aciers à très haute dureté, riches en particulier en phase carbure (chrome, molybdène, tungstène, cobalt, vanadium) qui apportent la résistance à l'abrasion. Ces aciers doivent être tenaces et résistants à l'endurance. Ces deux dernières propriétés sont contenues dans le choix de la nuance, mais également tributaires de la qualité métallurgique du dépôt.

Les études qui ont conduit à l'invention ont démontré, en particulier pour les cylindres de laminoirs à froid, qu'un acier de type "rapide" ou dérivé donne, au niveau de la surface de travail, de bien meilleurs rendements (durée de vie du cylindre avant usure) que les nuances utilisées tranditionnellement. Ces aciers "rapides" sont choisis selon l'invention dans la gamme de compositions suivante:

| | | | | | |
|---|---|---|---|---|---|
| C% | : | 0,5 à 2,6 | Mo% | : | au plus égal à 12 |
| Mn% | : | 0,2 à 1,7 | W% | : | au plus égal à 20 |
| Si% | : | 0,2 à 1,4 | V% | : | au plus égal à 10 |
| S% | : | au plus égal à 0,2 | Co% | : | au plus égal à 16 |
| Cr% | : | 2 à 14 | avec W% + V% + Mo% + Co% | | |
| | | | au moins égal à 3, | | |

Certains de ces aciers, ayant pour base des teneurs en chrome, molybdène, tungstène, vanadium, cobalt, entrant dans la gamme ci-dessus, ont déjà été décrits comme alliages de rechargement. Cependant, qu'il s'agisse d'électrodes (Brevet DE—A—2.754.437) ou de poudre préalliée (Brevet DE—B—1.209.756), ces alliages sont additionnés de bore (et de silicium), le bore étant un composant essentiel à la mise en oeuvre selon ces brevets. En effet, le bore améliore la soudabilité en diminuant dans de grande proportion le point de fusion de l'alliage et en augmentant la mouillabilité. L'association bore + carbone + silicium modifie aussi totalement le processus de solidification, la structure, la nature des phases dures, et les propriétés de l'alliage. Le document DE—B—1.209.756 à servi de base pour l'élaboration du préambule de la revendication 1.

Les procédés de rechargement retenus par l'invention permettent de se passer de bore et de conserver, dans leur intégrité, les propriétés métallurgiques des aciers de type rapide.

Bien entendu ces procédés permettent également l'emploi d'acier rapide additionné d'aluminium, ou modifié par la présence de bore et de silicium étant entendu que la présence de bore n'est pas essentielle pour la réalisation des procédés selon l'invention.

Le but de l'invention est de réaliser des pièces métalliques composites résistant bien à des sollicitations d'intensité élevée et différentes à coeur et en surface, dans une mesure bien supérieure aux solutions connues, en faisant appel à la fois aux excellentes propriétés des aciers rapides d'une part, aux procédés de soudure les plus modernes d'autre part.

A cet effet, la présente invention a pour objet un procédé de fabrication d'un cylindre on galet de laminage à froid par revêtement un rechargement d'une âme métallique en acier de construction faiblement allié, choisi de façon à assurer une liaison non fragile avec son revêtement ou rechargement, et de façon à être compatible avec les contraintes d'utilisation de ladite pièce, au moyen d'une couche métallique plus dure constituée par un acier rapide, présentant une dureté supérieure à 57 Rockwell C, au chrome-tungstène, ou au chrome-molybdène, ou au chrome associé à la fois à plusieurs éléments tels que: le tungstène, le molybdène, le vanadium, le cobalt, cette couche plus dure se présentant sous la forme d'un rechargement soudé à partir d'une poudre préalliée, l'opération de soudure étant suivie d'un traitement thermique du revenu ou de trempe et revenu, adapté à la nature de la poudre utilisée, l'acier faiblement allié qui constitue l'âme métallique présentant une composition située dans le domaine suivant:

| | | | | | |
|---|---|---|---|---|---|
| C% | = | 0,20 à 1 | Ni% | = | 0 à 2,5 |
| Mn% | = | 0,2 à 1,5 | Cr% | = | 0,50 à 6 |
| Si% | = | 0,20 à 1 | Mo% | = | 0 à 2 |
| S% | = | 0,005 à 0,200 | V% | = | 0 à 0,50 |

le reste étant constitué par du fer et des impuretés inévitables, en ce que ledit acier rapide, sous la forme d'une poudre préalliée, présente une composition définie ci-après:

| | | | | | |
|---|---|---|---|---|---|
| C% | = | 0,5 à 2,6 | Al% | = | 0 à 1,2 |
| Mn% | = | 0,2 à 1,7 | Mo% | = | 0 à 12 |
| Si% | = | 0,2 à 3 | W% | = | 0 à 20 |
| S% | = | au plus égal à 0,2 | V% | = | 0 à 10 |
| Cr% | = | 2 à 14 | Co% | = | 0 à 16 |
| B% | = | 0 à 2 | avec: W% + V% + Mo% + Co% | | |
| | | | au moins égal à 3, | | |

et en ce que le revêtement ou le rechargement de l'âme par cette poudre étant réalisé au moyen de l'un des procédés de soudure du groupe suivant:
soudure au moyen d'une torche à plasma d'arc transféré ou semi-transféré,
soudure au moyen d'une torche à laser.

Un acier de construction faiblement allié de la composition indiquée ci-dessus est compatible avec la soudure d'aciers rapides, en ce sens que, compte tenu du bilan thermique imposé par le soudage, et après un traitement thermique adapté, on obtient une courbe de dureté sans brusque discontinuité à la soudure, entre l'âme et le métal soudé. Autrement dit, un tel acier doit réaliser une liaison tenace avec l'acier rapide à souder en surface, c'est à dire qu'il ne doit se présenter, soit dans la liaison, soit dans la sous-couche, ni de région de résistance mécanique trop affaiblie (qui introduirait un risque d'enfoncement de la couche d'acier rapide), ni de région fragile (qui introduirait un risque d'écaillage de la couche d'acier rapide).

Le traitement thermique dans la zone affectée par l'opération de rechargement étant imposé par le rechargement lui-même, on doit choisir pour l'âme un acier dont les points de transformation et les courbes d'adoucissement s'accomodent bien du bilan thermique du soudage, de telle sorte qu'il réalise une liaison et une sous-couche qui soient toutes deux tenaces.

La poudre d'acier peut contenir une teneur en silicium comprise entre 0,2 et 1,4%, le bore étant une impureté résiduelle.

Bien entendu, suivant la nature des produits à obtenir et leurs conditions d'utilisation, il faut choisir judicieusement:

la nuance d'acier de construction faiblement allié qui constitue l'âme de la pièce composite à fabriquer, et qui doit réaliser une liaison non fragile avec l'acier rapide à souder en surface,

la nuance d'acier rapide constituant la poudre à souder, de façon que la dureté du revêtement dépasse une dureté de 57 Rockwell C,

le procédé de soudure: torche à plasma à arc transféré, ou à arc semi-transféré, ou torche à laser,

le traitement thermique: par exemple: un revenu, ou une suite de revenus successifs, ou une trempe suivie d'un ou de plusieurs revenus, en vue de transformer l'austénite résiduelle, et de précipiter les carbures, dans la couche dure.

Six exemples de tels choix sont exposés plus loin.

Les nuances d'aciers rapides utilisables pour la poudre à revêtir ou à recharger l'âme, se trouvant dans les domaines de composition suivants:

(a) Aciers au chrome-tungstène:

| C% | : 0,6 à 1,5 | W% | : 10 à 20 |
| Cr% | : 2,5 à 7 | V% | : 0 à 6 |
| Mo% | : 0 à 3 | Co% | : 0 à 2. |

(b) Aciers au chrome-molybdène

| C% | : 0,6 à 1,5 | W% | : 0 à 5 |
| Cr% | : 3,5 à 5 | V% | : 0 à 4 |
| Mo% | : 3 à 12 | Co% | : 0 à 2 |

(c) Aciers au chrome-tungstène-molybdène

| C% | : 0,6 à 1,8 | W% | : 5 à 12 |
| Cr% | : 3,5 à 5 | V% | : 0 à 7 |
| Mo% | : 3 à 12 | Co% | : 0 à 2 |

(d) Aciers au chrome-tungstène-cobalt

| C% | : 0,6 à 1,8 | W% | : 10 à 20 |
| Cr% | : 3,5 à 5 | V% | : 0 à 7 |
| Mo% | : 0 à 3 | Co% | : 2 à 14 |

(e) Aciers au chrome-molybdène-cobalt

| C% | : 0,5 à 1,4 | W% | : 0 à 5 |
| Cr% | : 3,5 à 5 | V% | : 0 à 5 |
| Mo% | : 3 à 12 | Co% | : 0,3 à 12 |

(f) Aciers au chrome-tungstène-molybdène-cobalt

| C% | : 0,7 à 1,9 | W% | : 5 à 12 |
| Cr% | : 3,5 à 5 | V% | : 0 à 7 |
| Mo% | : 3 à 12 | Co% | : 2 à 15 |

(g) Aciers surcarburés au chrome-tungstène-molybdène-vanadium-cobalt

| C% | : 1,1 à 2,6 | W% | : 4 à 12 |
| Cr% | : 3,5 à 7 | V% | : 2 à 10 |
| Mo% | : 3,3 à 7 | Co% | : 8 à 16 |

(h) Aciers à 12% de chrome

| C% | : 1,4 à 2 | W% | : traces |
| Cr% | : 11 à 14 | V% | : 0,4 à 1 |
| Mo% | : 0,5 à 1,5 | Co% | : 2,5 à 3,5 |

Les avantages des produits obtenus par les procédés selon l'invention tiennent d'une part à leur construction composite, et d'autre part au revêtement ou au rechargement par soudure d'un acier rapide, de dureté élevée, et exclusivement à l'état de poudre, suivi d'un traitement thermique bien adapté à la nuance de cet acier.

La construction composite permet d'adapter, mieux que la réalisation en matériau homogène, les aciers choisis à leurs fonctions respectives: tenue mécanique pour l'âme, résistance à la fatigue et à l'usure pour la couche de travail.

La construction composite représente une économie évidente de matières nobles, puisque seule la couche de travail est réalisée en matériaux à coût élevé.

Mais l'invention présente des avantages supplémentaires:

Grâce aux méthodes de soudure utilisées, et à l'emploi d'une poudre d'acier rapide de dureté élevée, elle permet de réaliser des revêtements dans lesquels les défauts métallurgiques du type: porosités, ou inclusions, ou ségrégations, sont absents, ou sont assez petits pour ne pas devenir des sites d'amorçage de fissures de fatigue des pièces sous l'effet de contraintes cycliques en service (Exemple: contraintes cycliques de Hertz dans le cas des cylindres de laminage à froid).

D'autre part, le métal constituant l'âme de la pièce composite est choisi dans le domaine de composition indiqué ci-dessus de telle sorte que:

1. Il assure une liaison tenace entre le revêtement et l'âme, de sorte qu'il n'y a pas de risque de décohésion entre le revêtement et l'âme sous l'effet des contraintes de fonctionnement de la pièce rechargée;

2. Il assure à l'âme les caractéristiques mécaniques de résistance souhaitées pour l'emploi spécifique considéré, après les cycles thermiques imposés à cette âme par l'opération de soudage.

Dans le cas des cylindres de laminoirs à froid, les procédés de fabrication revendiqués représentent également, par rapport à la réalisation hypothétique de cylindres constitués totalement en acier rapide, une économie d'énergie et une économie tout court. En effet, un cylindre fabriqué en acier rapide massif nécessiterait, au niveau des transformations à chaud et des traitements thermiques, une consommation d'énergie supérieure à celle de la fabrication suivant les procédés revendiqués.

La construction composite permet d'étendre aux cylindres de gros diamètres les bénéfices d'une couche de travail en acier rapide, alors qu'il serait difficile d'envisager la fabrication de ces mêmes cylindres en acier rapide massif, à cause des difficultés technologiques et métallurgiques que cela présenterait.

Les procédés de fabrication revendiqués permettent d'obtenir dans la couche dure déposée une structure homogène, avec une répartition fine des carbures, et sans défaut métallurgique du type inclusions ou porosités, susceptibles de nuire aux propriétés d'endurance du matériau aux contraintes mécaniques de fatigue.

Le métal constituant la couche dure est apporté, suivant les procédés revendiqués, sous forme de poudre. Cela autorise l'emploi d'aciers surcarburés tels que cités ci-dessus en (g), à forte proportion en carbures $V_4C_3$, très performants, même si ces compositions sont telles que ces aciers ne pourraient pas être mis en oeuvre par les moyens traditionnels de soudure.

Les performances des cylindres réalisés suivant l'invention (exprimées par exemple par le tonnage laminé avant la détérioration de la surface qui impose une remise en état) sont augmentées par rapport aux cylindres traditionnels grâce aux gains en coefficient de frottement et en résistance à l'usure. Ces performances peuvent être multipliées jusqu'à deux ou trois, par rapport aux performances des cylindres traditionnels.

La qualité de surface des produits laminés avec les cylindres réalisés suivant l'invention se trouve très améliorée, par rapport aux produits laminés avec des cylindres traditionnels.

Afin de bien faire comprendre l'invention, ou va décrire ci-après, à titre d'exemples non limitatifs, six modes de réalisation de produits fabriqués selon l'invention.

*Premier mode* — Cylindre pour laminage à froid de petits feuillards.

L'ébauche de départ est prise dans une barre laminée en acier de construction faiblement allié de composition:

| C% | Mn% | Si% | S% | Ni% | Cr% | Mo% | V% |
|---|---|---|---|---|---|---|---|
| 0,49 | 0,88 | 0,27 | 0,009 | 0,18 | 0,98 | 0,08 | 0,13 |

Son état thermique est trempé et revenu pour une dureté de 320 Brinell. Le diamètre d'ébauche est 170 mm. Cette ébauche est préchauffée à une température de 450°C. L'acier constituant la couche dure est déposé par soudure au moyen d'une torche à plasma d'arc semi-transféré, alimentée par deux générateurs, fournissant l'arc soufflé et l'arc transféré. Le dépôt est réalisé en cordons juxtaposés avec un léger recouvrement, de manière à obtenir une surface uniforme, et en plusieurs couches successives, pour obtenir l'épaisseur désirée. L'acier constituant la couche dure est apporté sous forme d'une poudre de granulométrie comprise entre 60 et 180 microns, ayant la composition suivante:

| C% | Mn% | Si% | S% | Ni% | Cr% | Mo% | W% | V% | Co% |
|---|---|---|---|---|---|---|---|---|---|
| 0,86 | 0,22 | 0,23 | 0,010 | 0,22 | 4,35 | 5,20 | 6,15 | 1,95 | 0,35 |

L'intensité d'arc soufflé ou pilote est de 85 ampères. L'intensité d'arc transféré est de 195 ampères. La

tension d'arc est de 32 volts. En fin d'opération de rechargement, la pièce a un diamètre supérieur ou égal à 203 mm.

La pièce est refroidie à l'air calme, jusqu'à la température ambiante, ce qui assure une trempe naturelle de la couche dure. La pièce subit ensuite un double traitement thermique de revenu à 550°C, ce qui confère à la couche déposée sa dureté optimale, sans affecter la dureté de l'âme. La couche de travail est ensuite rectifiée au diamètre nominal du cylindre. Sa dureté superficielle vérifiée est de 64 HRC. (64 Dureté Rockwell C).

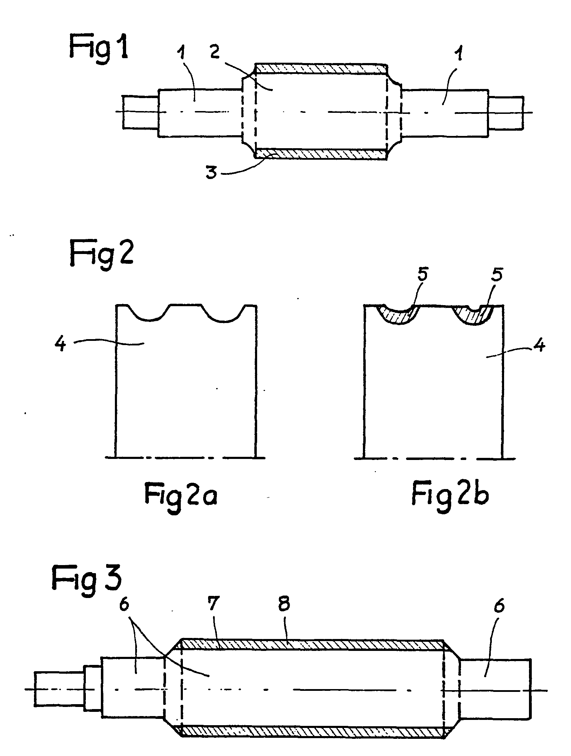

La figure 1 est une coupe verticale du cylindre obtenu après usinage de rectification. L'âme 1 en acier faiblement allié se trouve ainsi revêtue sur sa partie utile 2 d'une couche 3 en acier rapide d'environ 15 mm d'épaisseur.

Après usure en service de cette couche 3, il est possible de la recharger suivant le procédé de l'invention.

*Deuxième mode* — Galet de laminage de fils.

La figure 2a est une semi-coupe verticale de l'ébauche du galet, avec ses deux gorges circulaires.

La figure 2b est une semi-coupe verticale du même galet après application de l'invention et usinage.

L'ébauche de départ est prise dans une barre laminée en acier de construction faiblement allié de composition:

| C% | Mn% | Si% | S% | Ni% | Cr% | Mo% | V% |
|---|---|---|---|---|---|---|---|
| 0,40 | 0,70 | 0,73 | 0,005 | 0,095 | 3,18 | 0,81 | 0,29 |

donc plus chargé en chrome et en molybdène que dans le précédent mode.

Son état thermique est trempé et revenu pour une dureté de 360 Brinell. (*) L'ébauche a un diamètre de 192 mm et comporte deux gorges circulaires.

L'ébauche est préchauffée à une température de 400°C. L'acier constituant la couche dure est déposé par soudure au moyen d'une torche à plasma d'arc semi-transféré, alimentée par deux générateurs, fournissant l'arc soufflé et l'arc transféré. Le rechargement est réalisé en cordon superposé. Le premier cordon a une largeur de 10 mm. Les cordons superposés vont s'élargissant pour remplir toute la largeur de la gorge. L'acier constituant la couche dure est apporté sous forme de poudre de granulométrie comprise entre 60 et 180 microns, ayant la composition suivante:

| C% | Mn% | Si% | S% | Ni% | Cr% | Mo% | W% | V% | Co% |
|---|---|---|---|---|---|---|---|---|---|
| 1,95 | 0,35 | 0,30 | 0,005 | moins de 0,10 | 3,47 | 3,02 | 9,18 | 5,02 | 14,80 |

L'intensité d'arc soufflé, ou pilote, est de 95 ampères. L'intensité d'arc transféré est de 190 ampères. La tension d'arc est de 30 volts.

En fin d'opération de rechargement, la pièce est refroidie naturellement à l'air calme jusqu'à la température ambiante, ce qui assure la trempe de la couche rechargée, puis subit cinq traitements thermiques de revenu à 550°C. La dureté est de 67 Rockwell C.

La pièce est usinée au diamètre nominal et les gorges sont rectifiées au profil désiré, suivant la figure sur laquelle l'âme se trouve représentée en 4 et la couche dure en 5.

*Troisième mode* — Cylindre de laminage à froid de feuillard large.

La figure 3 est une coupe verticale du cylindre après l'opération finale d'usinage.

L'ébauche de départ est prise dans une barre laminée en acier de construction faiblement allié de composition:

| C% | Mn% | Si% | S% | Ni% | Cr% | Mo% | V% |
|---|---|---|---|---|---|---|---|
| 0,47 | 0,90 | 0,24 | 0,012 | 0,16 | 1,02 | 0,07 | 0,14 |

C'est pratiquement le même acier que pour le premier mode.

Son état thermique est trempé et revenu pour une dureté de 340 Brinell. Dans la zone destinée à recevoir la couche dure, le diamètre de l'ébauche est de 174 mm. Cette ébauche est préchauffée à une température de 500°C. L'acier constituant la couche dure est déposé par soudure au moyen d'une torche à plasma d'arc semi-transféré, alimentée par deux générateurs, fournissant l'arc soufflé et l'arc transféré.

Le dépôt est réalisé en cordons juxtaposés avec un léger recouvrement de manière à obtenir une surface uniforme, et en plusieurs couches successives, pour atteindre l'épaisseur désirée. L'acier constituant la couche dure est apporté sous forme de poudre préalliée, de granulométrie comprise entre 60 à 180 microns, ayant la composition suivante:

(*) Dureté BRINELL suivant la norme AFNOR NF A 03—152.

| C% | Mn% | Si% | S% | Ni% | Cr% | Mo% | W% | V% | Co% |
|---|---|---|---|---|---|---|---|---|---|
| 0,85 | 0,27 | 0,22 | 0,007 | 0,15 | 4,60 | 5,15 | 6,2 | 2,05 | 0,4 |

L'intensité d'arc soufflé, ou pilote est de 50 ampères. L'intensité d'arc transféré est de 215 ampères. La tension d'arc est de 33 volts.

En cours de rechargement, la température de la pièce est maintenue au-dessus de 360°C, au moyen de rampes chauffanges. En fin d'opération de rechargement, la pièce doit avoir un diamètre supérieur ou égal à 202 mm. Le bilan thermique de l'opération permet d'obtenir la trempe naturelle de l'acier déposé par simple refroidissement naturel de la pièce, en air calme, lorsque le rechargement est terminé.

La pièce subit ensuite un double traitement thermique de revenu à 550°C, ce qui confère à la couche déposée, sa dureté optimale, sans affecter la dureté de l'âme.

La couche de travail est ensuite rectifiée au diamètre nominal du cylindre. Sa dureté est de 63 à 65 Rockwell C. L'usinage du cylindre est terminé suivant la figure 3, sur laquelle la surface utile 7 de l'âme 6 est recouverte de la couche dure 8.

**Revendications**

1. Procédé de fabrication d'un cylindre ou galet de laminage à froid composite par revêtement ou rechargement d'une âme métallique en acier de construction faiblement allié, choisi de façon à assurer une liaison non fragile avec son revêtement ou rechargement et de façon à être compatible avec les contraintes d'utilisation de ladite pièce, au moyen d'une couche métallique plus dure constituée par un acier rapide présentant une dureté supérieure à 57 Rockwell C, au chrome-tungstène, ou au chrome-molybdène, ou au chrome associé à plusieurs éléments tels que: le tungstène, le molybdène, le vanadium, le cobalt, cette couche plus dure se présentant sous la forme d'un rechargement soudé à partir d'une poudre préalliée, l'opération de soudure étant suivie d'un traitement thermique de revenu, ou trempe et revenu, adapté à la nature de la poudre utilisée, ledit acier de construction faiblement allié constituant l'âme métallique présentant une composition située dans le domaine suivant: C%: 0,20 à 1; Mn%: 0,2 à 1,5; Si%: 0,20 à 1; S%: 0,005 à 0,200; Ni%: 0 à 2,5; Cr%: 0,50 à 6; Mo%: 0 à 2; V%: 0 à 0,5, le reste étant constitué par du fer et des impuretés inévitables ledit acier rapide, sous la forme d'une poudre préalliée, présentant une composition définie ci-après:

| | | | | | |
|---|---|---|---|---|---|
| C% | : | 0,5 à 2,6 | Al% | : | 0 à 1,2 |
| Mn% | : | 0,2 à 1,7 | Mo% | : | 0 à 12 |
| Si% | : | 0,2 à 1,4 | W% | : | 0 à 20 |
| S% | : | au plus égal à 0,2 | V% | : | 0 à 10 |
| Cr% | : | 2 à 14 | Co% | : | 0 à 16 |
| B% | : | 0 à 2 | | | |

avec W% + V% + Mo% + Co% au moins égal à 3,

et en ce que le revêtement ou le rechargement de l'âme par cette poudre étant réalisé au moyen de l'un des procédés de soudure du groupe suivant:
soudure au moyen d'une torche à plasma d'arc transféré ou semi-transféré,
soudure au moyen d'une torche à laser.

2. Procédé de fabrication selon la revendication 1, caractérisé en ce que la poudre constituant après soudure la couche métallique dure est en acier rapide surcarburé, présentant une composition située dans le domaine ci-dessous défini:

| | | | | | |
|---|---|---|---|---|---|
| C% | : | 1,1 à 2,6 | W% | : | 4 à 12 |
| Cr% | : | 3,5 à 7 | V% | : | 2 à 10 |
| Mo% | : | 3,3 à 7 | Co% | : | 8 à 16. |

3. Procédé de fabrication selon la revendication 1, caractérisé en ce que la poudre en acier rapide contient en outre une teneur en silicium comprise entre 0,2 et 1,4%, le bore étant une impureté résiduelle.

**Patentansprüche**

1. Verfahren zur Herstellung eines zusammengesetzten Kaltwalzzylinders oder eine Kaltwalze durch Beschichtung oder Auftragschweißen eines metallenen Kerns bzw. einer Seele aus einem schwach legierten Baustahl, der so gewählt wird, daß eine unzerbrechliche Verbindung mit seiner Beschichtung oder Auftragschweißung gewährleistet ist und daß er mit der Benutzungsbeanspruchung dieses Teiles verträglich ist, mittels einer härteren Metallschicht, die aus einem Schnellstahl besteht, der eine Rockwell-C-Härte von mehr als 57 aufweist und mit Chrom-Wolfram oder Chrom-Molybdän oder mit Chrom hergestellt ist, das mit mehreren Elementen wie Wolfram, Molybdän, Vanadium, Kobalt verbunden ist, wobei diese härtere Schicht in Form einer Auftragsschweißung ausgehend von einem vorlegierten Pulver vorliegt und dem Schweißvorgang ein thermischer Vergütungsvorgang oder Härtungs- und Vergütungsvorgang nachfolgt, der der Beschaffenheit des eingesetzten Pulvers angepaßt ist, wobei der genannte schwach legierte Baustahl, der den metallenen Kern bildet, eine Zusammensetzung inerhalb des folgenden Bereiches aufweist: C%: 0,20—1; Mn%: 0,2—1,5; Si%: 0,20—1; S%: 0,005—0,200; Ni%: 0—2,5; Cr%: 0,50—6; Mo%: 0—2; V%: 0—0,5; wobei der Rest aus Eisen und unvermeidlichen Verunreinigungen besteht und der genannte Schnellstahl in Form eines vorlegierten Pulvers die nachstehend definierte Zusammensetzung aufweist:

| | | | | | |
|---|---|---|---|---|---|
| C% | : | 0,5—2,6 | Al% | : | 0—1,2 |
| Mn% | : | 0,2—1,7 | Mo% | : | 0—12 |
| Si% | : | 0,2—1,4 | W% | : | 0—20 |
| S% | : | höchstens bis 0,2 | V% | : | 0—10 |
| Cr% | : | 2—14 | Co% | : | 0—16 |
| B% | : | 0—2 | mit W% + V% + Mo% + Co% | | |
| | | | wenigstens gleich 3 | | |

wobei der Rest aus Eisen und unvermeidlichen Verunreinigungen besteht, und die Beschichtung oder die Auftragsscheißung des Kernes mit diesem Pulver mittels eines Schweißverfahrens aus folgender Gruppe durchgeführt wird:

Schweißen mittels Plasmafackel mit transferiertem oder semitransferiertem Lichtbogen,

Schweißen mittels Laserfackel.

2. Herstellungsverfahren nach Anspruch 1, dadurch gekennzeichnet, daß das Pulver, das nach dem Schweißen die harte Metallschicht bildet, aus Schnell-Stahl mit überhöhtem Kohlenstoffgehalt besteht, der eine Zusammensetzung im nachstehend definierten Bereich aufweist:

| | | | | | |
|---|---|---|---|---|---|
| C% | : | 1,1 bis 2,6 | W% | : | 4 bis 12 |
| Cr% | : | 3,5 bis 7 | V% | : | 2 bis 10 |
| Mo% | : | 3,3 bis 7 | Co% | : | 8 bis 16 |

3. Herstellungsverfahren nach Anspruch 1, dadurch gekennzeichnet, daß das Pulver aus Schnellstahl außerdem einen Siliziumgehalt von 0,2—1,4% aufweist und das Bor einen Verunreinigungsrückstand darstellt.

## Claims

1. Process for manufacturing a composite cold rolling cylinder or roller by coating or surfacing a metal core made of lightly alloyed construction steel, chosen so as to ensure a non-fragile bond with its coating or surfacing and so as to be compatible with the service stresses of the said part, by means of a harder metal layer consisting of a high-speed steel with a hardness greater than 57 Rockwell C, made of chromium-tungsten, or chromium-molybdenum, or chromium combined with several elements such as: tungsten, molybdenum, vanadium and cobalt, this harder layer being in the form of a surfacing welded from a prealloyed powder, the welding operation being followed by a thermal annealing treatment, or tempering and annealing, adapted to the nature of the powder employed, said lightly-alloyed construction steel forming the metal core has a composition in the following range: C%: 0.20 to 1; Mn%: 0.2 to 1.5; Si%: 0.20 to 1; S%: 0.005 to 0.200; Ni%: 0 to 2.5; Cr%: 0.50 to 6; Mo%: 0 to 2; V%: 0 to 0.5, the remainder being iron and inevitable impurities the said high-speed steel, in the form of a prealloyed powder, having a composition defined hereinafter:

| | | | | | |
|---|---|---|---|---|---|
| C% | : | 0.5 to 2.6 | Al% | : | 0 to 1.2 |
| Mn% | : | 0.2 to 1.7 | Mo% | : | 0 to 12 |
| Si% | : | 0.2 to 1.4 | W% | : | 0 to 20 |
| S% | : | maximum 0.2 | V% | : | 0 to 10 |
| Cr% | : | 2 to 14 | Co% | : | 0 to 16 |
| B% | : | 0 to 2 | with W% + V% + Mo% + Co% | | |
| | | | minimum 3, | | |

the remainder being iron and inevitable impurities and in that the coating or the surfacing of the core with this powder is produced by means of one of the welding processes of the following group:

welding by means of a transferred or semi-transferred arc plasma torch,

welding by means of a laser torch.

2. Manufacturing process according to Claim 1, characterized in that the powder forming the hard metal layer after welding is made of a supercarburized high-speed steel, having a composition in the following region:

| | | | | |
|---|---|---|---|---|
| C% | : 1.1 to 2.6 | W% | : 4 to 12 |
| Cr% | : 3.5 to 7 | V% | : 2 to 10 |
| Mo% | : 3.3 to 7 | Co% | : 8 to 16 |

3. Manufacturing process according to Claim 1, characterized in that the high-speed steel powder additionally contains between 0.2 and 1.4% silicon, boron being a residual impurity.

Fig 1

Fig 2

Fig 2a

Fig 2b

Fig 3